# EUROPEAN PATENT SPECIFICATION

(11) **EP 3 638 403 B1**
(45) Date of publication and mention of the grant of the patent: **28.02.2024**
(21) Application number: 17913255.0
(22) Date of filing: 12.06.2017
(51) Int. Cl.: B01D 53/52, B01D 53/14, B01D 53/02

(54) **MODULAR SYSTEM AND METHOD FOR POLISHING PROCESS**
MODULARES SYSTEM UND VERFAHREN FÜR POLIERPROZESS
SYSTÈME MODULAIRE ET PROCÉDÉ POUR TRAITEMENT DE POLISSAGE

(43) Date of publication of application: 22.04.2020
(73) Proprietor: Abu Dhabi Gas Industries Ltd. (Gasco), Abu Dhabi (AE)
(72) Inventor: CADOURS, Renaud, Abu Dhabi (AE)
(74) Representative: Bardehle Pagenberg Partnerschaft mbB Patentanwälte Rechtsanwälte
(86) International application number: PCT/IB2017/053466
(87) International publication number: WO 2018/229525

(56) References cited:
- CA-A1- 2 385 038
- US-A1- 2009 100 753
- US-A1- 2009 100 753
- US-A1- 2012 264 197
- US-A1- 2016 001 219
- US-A1- 2016 312 141
- US-B1- 7 628 966
- US-B2- 7 063 732
- US-B2- 8 527 071
- Ning Wang: "Adsorption of Hydrogen Sulfide on Fine Rubber Particle Media (FRPM)", , 1 January 2013 (2013-01-01), pages 1-135, XP055743843, Retrieved from the Internet: URL:HTTPS://LIB.DR.IASTATE.EDU/ETD/13110 [retrieved on 2020-10-26]

## Description

This application relates to a method and system for treating natural gas (also called "sour gas" or "feed gas"). Particularly, this application relates to a polishing method and system for treating natural gas for removing the hydrogen sulfide (H₂S) from the natural gas.

### Background of the invention

The hydrogen sulfide (H₂S) must be removed from natural / sour gas resulting in a treated gas. Personal safety and equipment integrity dictate the specifications (e.g. NACE Standard MR01-75) of the treated gas, considering the downstream user requirements as well: domestic gas network, catalytic processes.

Several technologies are available today for acid gas removal (such as removal of the H₂S). If one would consider the removal of the H₂S from the untreated natural / sour gas, a process engineer can select either liquid or solid scavengers, adsorbents, absorption solvent, direct conversion processes. The selection will be dictated for example by location of the system (within an existing plant or a remote location), quantity of the hydrogen sulfide to be removed, available utilities (e.g. air, cooling water, electricity, steam, fuel gas), environmental considerations and operating philosophy (manned or unmanned).

Prior art includes guidelines to select the most suitable technology (e.g. "Gas Purification" 5th edition, by Kohl and Nielsen 1997) for the removal of the hydrogen sulfide from natural gas. These guidelines are mainly based on flow of feed / sour / natural gas and content of the hydrogen sulfide in the natural gas, i.e. on the amount of the H₂S to be removed.

### Background to the Invention

Scavenger technologies are non-regenerative solids or liquids designed for removal of hydrogen sulphide from natural / sour gas. There is a chemical reaction between the H₂S and an active chemical / adsorbent in a scavenger unit, also called a scavenger bed or
US patent US 2009/100753 A1 describes a system and method for removing hydrogen sulfide (H₂S) from a natural gas using a fluid scavenging reagent. The system comprises columns, a separator, a tank for clean scavenger reagent, a spent reagent tank, and a control / feedback system. Sour gas a is introduced at a low point in the column together with the scavenging reagent (SR) from a fresh SR source by a pump. The sour gas and the SR pass upwardly through the column whereby the sour gas is sweetened, and the SR is consumed. The sweetened gas and the SR collectively pass over the top of the column and thereafter enter separator whereby the sweetened gas and a liquid SR are separated on the basis of density. The liquid SR is removed from the bottom of the separator and delivered to the spent reagent tank for disposal. The sweetened gas is removed from the top of the separator for delivery to the column. The system is controlled by the control system to monitor the H₂S concentration in the sweetened gas and to control the flow of SR to the column the through pump.

US 7 063 732 B2 describes a fuel processing system and method for processing fuel for a fuel cell having a first adsorbent bed for adsorption of high molecular weight organic sulfur-containing compounds and inorganic sulfur-containing compounds, and a second adsorbent bed for adsorption of low molecular weight organic sulfur-containing compounds, where the adsorbent beds are arranged such that the fuel to be processed passes through one of the adsorbent beds and, thereafter through the other adsorbent bed . The patent further describes that the adsorbent beds are arranged in a "lead lag" configuration. The fuel gas is delivered to the first desulfurizer in this configuration. After undergoing a sulfur adsorption process in the desulfurizer, the fuel gas passes to the second desulfurizer.

Ning Wang: "Adsorption of Hydrogen Sulfide on Fine Rubber Particle Media (FRPM)",, 1 January 2013 (2013-01-01), pages 1-135, XP055743843, retrieved from the Internet: URL:HTTPSI/LIB.DR.IASTATE.EDU/ETD/ 13110 describes adsorbing H₂S using fine rubber particle media (FRPM) derived from consumer waste sources such as discarded vehicle tires (page viii). Wang describes two different adsorption methods using ZnCl₂ and also describes measuring the H₂S adsorption capacity of the FRPM samples. The document does not disclose scavenger units / reactors being arranged in series or parallel connection.

US 8 527 071 B2 describes a process for producing free sulfur from hydrogen sulfide by manipulating the flow rate of a feed stream containing oxygen to a furnace. The flow rate is controlled in such a manner that a desired proportion of the hydrogen sulfide fed to the furnace is converted to sulfur dioxide. Combustion of hydrogen sulfide is precisely controlled by the proposed system to maintain the hydrogen sulfide and sulfur dioxide concentrations in the tail gas at acceptable levels to minimize the environmental. The US patent does not describe nor hint at arranging scavenger units in series or parallel connection. US 8 527 071 B2 is also not directed at providing a system and method for efficiently operating at least two scavenger units to polish a stream of natural/sour gas.

### Background to the Invention

Scavenger technologies are non-regenerative solids or liquids designed for removal of hydrogen sulphide from natural / sour gas. There is a chemical reaction between the H₂S and an active chemical / adsorbent in a scavenger unit, also called a scavenger bed or adsorbent bed. The reaction is irreversible, the trapped H₂S is trapped in the adsorbent (scavenger). The operating cost of the hydrogen sulphide removal process is then the consumption of the adsorbent and is directly correlated to the amount of the H₂S to be removed. In practice, the scavenger technology is generally used when a H₂S mass flowrate is lower than 200 kg/d. The 200 kg/d limit can vary from 50 kg/d and 500 kg/d, according to the application case specifications: site access, unit location, available utilities, process configuration, chemical properties, chemical cost, disposal route.

Solid scavengers are generally based on a metal oxide component. This metal oxide component reacts irreversibly with the H₂S. Many types of these metal oxide components (adsorbents) are available on the market from suppliers as UOP, Johnson Matthey, Haldor Topsoe, Sulfatreat.

The solid scavenger products differ in the type of metal used in the metal oxide component, or by a binder used to control mechanical properties of the scavenger particles (in the form of beads or pellets) in the scavenger products. In any case the effect is based on the same type of chemical reaction, which is a fast, irreversible reaction. That means that the content of the hydrogen sulphide in the treated gas at an outlet of the scavenger unit would be substantially zero. A diffusion mechanism within macro or micro pores of the adsorbent formed by the metal oxide component has to be controlled. In practice, the H₂S content in the gas at the outlet is assumed to be less than 2-3 ppmv in a conservative approach.

That means that it is required to control hydraulic phenomena in an adsorbent bed in the scavenger, such as gas velocity or gas distribution. As it is natural gas treatment with a low H₂S content, the gas flow rate is specifyed by the diameter or the cross sectional area of the adsorbent bed. The height of the adsorbent bed is determined by taking into account the amount of the hydrogen sulphide to be removed, or by hydraulic or mechanical constraints (e.g. the crushing strength - to avoid adsorbent pellet crushing into dust) or the adsorbent bed, preferably a favourable ratio height/diameter (correlated to the adsorbent properties) is to be achieved with the adsorbent bed.

The scavenger technology is used for polishing and cleaning the treated natural or sour gas containing a residual amount of the H₂S, removing the remaining ppm of the H₂S from the gas. It is difficult to obtain the treated gas having a H₂S content in the range 20 to 50 ppmv. In this case, it is generally proposed to use a system with a by-pass of the scavenger with the adsorbent bed. Only a part of the natural gas is treated in the system with the by-pass. The H₂S content in the treated gas is assumed to be below 3 ppmv, and the stream of the treated gas having passed through the scavenger and the adsorbent bed is used to dilute the non-treated stream of the gas having passed through the bypass.

During design of the system, the flow of the natural or sour gas through the scavenger and the adsorbent bed to be treated is then correlated to the amount of the H₂S in the natural gas that needs to be treated.

During operation, a control unit may control the flow of the natural gas diverted to the scavenger/adsorbent bed based on the results of at least one analyzing unit.

### Example:

Consider a sour gas with 100 ppmv of the H₂S, and aiming to have a maximum amount of 50 ppmv in the treated gas, 55 % of the total flow of the sour gas will be treated to result in the treated gas with a maximum of 3 ppmv of the remaining H₂S and will be mixed with the 45 % of untreated natural/sour gas (from the untreated stream from the by-pass). The final gas after mixing of the gas from both of the streams will contain 47 ppmv of the H₂S particles.

If the sour gas contains initially 250 ppmv of the H₂S, then it is required to treat 83 % of the sour gas in the scavenger to target the final gas composition after mixing with a maximum of 45 ppmv of the H₂S particles.

If the H₂S content in the sour gas is fluctuating between 55 and 100 ppmv, but with possible peaks at 250 ppmv, the design of the scavenger with the adsorbent bed needs to take into account the peaks of the H₂S content, i.e. 250 ppmv peaks. That means that the diameter of the scavenger and the adsorbent beds will be determined in consideration of the flow of natural/sour gas to be treated during the peak through the scavenger with the adsorbent bed, and the height of the scavenger with the adsorbent bed will be determined from hydraulic limitations, and not from the quantity of the H₂S particles to be removed from the natural/sour gas.

This design philosophy will result in a significant overdesign for the normal operation between 55 and 100 ppmv of the H₂S particles in the sour gas, with a significant quantity of scavenger adsorbents in the vessels containing the respective scavenger/adsorbent beds. This design philosophy results in an overdesigned H₂S adsorption capacity with an operating life of the scavenger that is higher than the guaranteed lifetime of the adsorbent in the adsorbent bed when in operation (from 12 to 36 months usually guaranteed by the supplier of the scavenger or the adsorbent bed).

As a conclusion, the scavenger technology has been developed for treating and polishing of the stream of the natural/sour gas with a minimum H₂S content. It is efficient for a steady feed (natural/sour) gas (flow and H₂S content), but the scavenger technology is not flexible to accommodate H₂S content fluctuations in the feed sour gas. Usual design approach results in overdesign of the bed by considering a conservative case (see above).

The object of the present application is to reduce the amount of adsorbent used to treat the sour gas and to utilise and/or control the adsorbent in the scavenger unit and the adsorbent bed according to its lifetime guarantee or to the operating design philosophy.

This object is solved with a system and method having the features of the independent claims.

### Summary of the invention

The essential technical features of the system of the invention are explicitly defined in the wording of independent claims 1

The system of the invention comprises a modular system with several small scavenger units/vessels having smaller scavenger/absorbent beds arranged in parallel to each other, rather than a single scavenger unit designed according to the highest H₂S content in the natural/sour gas to be treated. The scavenger units may be arranged in at least one group. A parallel arrangement of at least one group of scavenger units and at least one single scavenger unit is alternatively possible. As set forth in the detailed description, the system may comprise the following setups: at least two scavenger units being arranged in parallel connection, at least two groups of scavenger units or a combination of at least one scavenger unit and at least one group of scavenger units. In each possible group of scavenger units, scavenger unit can be placed to be upstream of the other scavenger unit.

The essential technical features of the method of the invention are explicitly defined in the wording of independent claim 2. The method comprises the steps of analyzing a feed of the sour/natural gas, analyzing a composition in a natural processed gas extracted from at least one scavenger unit, processing results of the analysis of the feed of natural/sour gas and the treated gas, controlling of valves upstream of and connected to at least two scavenger units. The controlling of the valves is based on the processed results.

In one aspect, the step of analyzing of the feed of sour gas comprises at least one of an analysis and/or measurement of the composition of the feed of the sour gas, an analysis of the pressure of the feed of the sour gas, or an analysis of the temperature of the feed of sour gas.

Similarly, the analyzing and/or measurement of the processed gas comprises at least one of an analysis of the composition of the processed gas, an analysis of the pressure of the processed gas, an analysis of the temperature of the processed gas.

The method for treating sour gas comprises the removal of hydrogen sulfide from the sour gas.

A system for treating sour gas is disclosed. The system comprises at least two scavenger units, at least one feed pipe upstream of the at least two scavenger units, at least one extraction pipe downstream of the at least two scavenger units, at least one feed analyzing unit connected to the feed pipe for detection of an contaminants content in a sour gas in the feed pipe, at least one extraction analyzing unit connected to the extraction pipe, at least one valve upstream of the at least two scavenger units, at least one control unit, connected to the feed analyzing unit and to the extraction analyzing unit and further connected the at least one valve, wherein the at least one control unit is adapted to control the at least one valve based on results of the analyzing units.

In one aspect, the at least two of the at least two scavenger units are arranged in a group of scavenger units (see above explanation of possible setups regarding the units/groups).

In a further aspect, at least one of the extraction analyzing unit or the feed analyzing unit comprises at least one of a flowmeter, a thermometer or a pressure gauge.

In a further aspect, the system comprises three scavenger units, which are connected to the control unit and the scavenger units are adapted to remove hydrogen sulfide from the sour gas.

According to one embodiment of the present application, the main design parameter will be the velocity of the gas flow of the sour gas in the different scavenger units. The number of scavenger units in parallel will be arranged considering the hydraulic limitations for the bed design and the quantity of sulphur to be removed.

The control unit can control the number of the scavenger units to be in service to achieve the required specification for the H₂S content in the treated gas, from the results of the flowmeter and the feed analyser of the feed of sour gas. The specification for the H₂S content in the treated gas is ranging from 1 ppmv for domestic use to 40 ppmv as indicated in NACE standards (see above).

The H₂S content in the treated gas can be measured by the online analysing unit to achieve the required specification.

The system according to this disclosure can adjust the number of the scavenger units in operation according to the fluctuation of the feed of sour gas (the gas flow and/or the H₂S content). By selecting the scavenger unit in operation, use of the adsorbent contained in the scavenger units will be arranged according to a lifetime guarantee of the adsorbent or to the operating design philosophy.

The system and method can be extrapolated to any further types of scavenger systems, such as scavenger systems used for the removal of mercury or further sulphur components in a gas or a liquid stream.

The method is a continuous process.

All components / units may be configured to submit or calculate the respective results or orders in "real time".

The system and method is limited to a polishing/treating process, applicable to gas with low contaminants content (in this non-limiting example H₂S).

The system of this disclosure enables example flexibility in operation, reduced amount of chemicals used in the scavenger units and the scavenger beds and thus reduction of operating cost and reduced sized of vessels used for the scavenger units and thus a cost reduction.

### Brief description of the drawings

A more complete appreciation of the invention a many of the attendant advantages thereof will be readily obtained as the same becomes better understood by reference to the following detailed description when considered in connection with the accompanying drawings, wherein:
Figure 1 is a schematic view of a system for treating natural gas according to the prior art;
Figure 2 is a schematic view of an embodiment of the system for treating natural gas according to one aspect of present application;
Figure 3 is a schematic view of another embodiment of the system for treating natural gas according to another aspect of present application;
Figure 4 is a flow chart of a method according to the present application.

### Detailed description of the embodiment

The invention will now be described with reference to the accompanying figures, wherein like reference numerals designate corresponding or identical elements throughout the various figures. It will be appreciated that different aspect, embodiments and components of the invention may be exchanged with other aspects, embodiments and components.

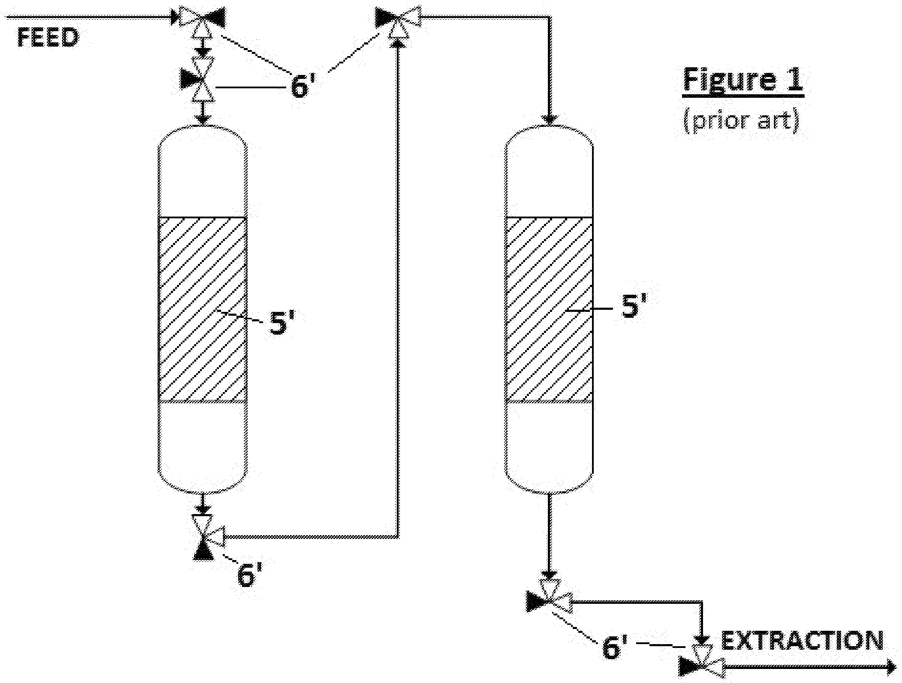

Referring initially to figure 1, a system according to the prior art is depicted in which valves 6' and scavenger units 5' are connected by piping (arrows). The arrows also indicate the flow direction of a gas within the pipes (arrows). The black triangles in the valves 6' indicate a blocked passage. The white triangles in the valves 6' indicate a free passage for the gas.

The mode of operation of both scavenger units 5' in Figure 1 is a conventional lead / lag configuration. The valves 6' and the piping are arranged such that every of the two scavenger units 5' can be in the lead upstream of the other scavenger unit 5'.

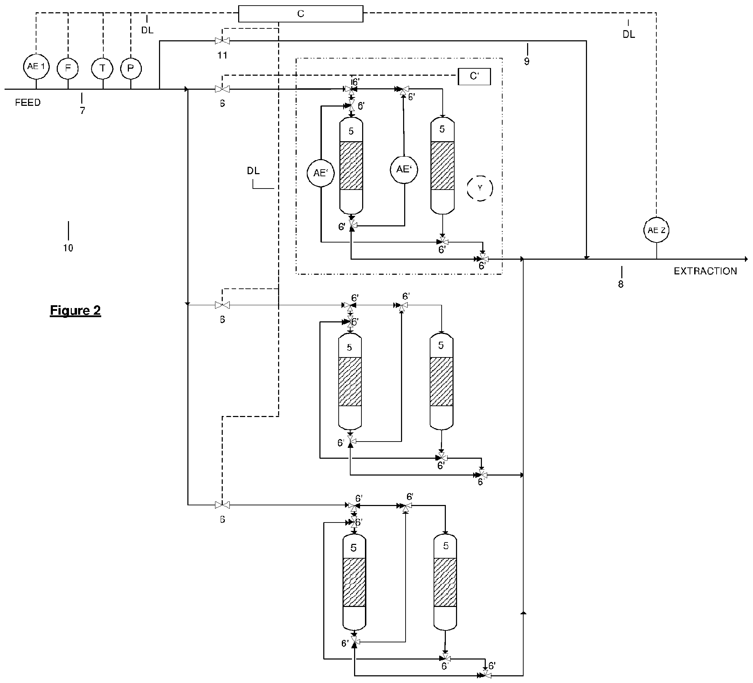

Figure 2 depicts a system 10 for the method outlined in this document for treating the sour/natural/feed gas. In this non-limiting example, six scavenger units 5 are connected in parallel in three groups to a feed pipe 7 of the system 10. In fig. 2 only one group of the scavenger units 5 is marked by the depicted box (Y) outlined with a line formed of two dots and a dash line. Each of the three groups comprises two scavenger units 5. The feed pipe 7 feeds the untreated sour/natural gas into the system 10. An extraction pipe 8 is downstream of all the three groups of scavenger units 5. Valves 6' connect upstream ones of the scavenger units 5 with other one(s) of the scavenger units 5. In this non-limiting aspect of the system, there are six valves 6' per group of the scavenger units 5.

The valves 6 are located upstream of each group of the scavenger units 5 such as each of the groups of the scavenger units 5 can be disconnected from or connected with the feed pipe 7. Further, a bypass pipe 9 having a bypass valve 11 is connected to the feed pipe 7 as well as to the extraction pipe 8.

The valves 6, 6' and 11 are all connected to data lines DL (shown as dashed lines in Fig. 2). All of the valves 6, 6' and 11 in the system 10 can be controlled individually. For the sake of clarity only one valve 6' of the group Y of the scavenger units 5 is depicted with a connected one of the data lines DL in Figure 2. The valves 6' are arranged such that, in each group of the scavenger units 5, either one of the individual scavenger units 5 can be located first in a lead / lag configuration. This means that, in each group of the scavenger units 5, an opening sequence of the valves 6' can be arranged such that the sour gas from the feed pipe 7 reaches a selected one of the scavenger units 5 first and then subsequently the other ones of the scavenger units 5 in this same group. The valves 6' in each group of scavenger units 5 can be controlled independently from each other of the two remaining groups of scavenger units 5. The valves 6' within each group of the scavenger units 5 can also be controlled independently from each other of the valves 6' within said group of the scavenger units 5.

A control unit C is connected to feed analyzing units AE1, F, T, P which are in turn connected to the feed pipe 7. The control unit C is further connected to all of the valves such as to control the degree of valve opening of the connected ones of the valves independently from other ones of the valves. The control signals are transmitted to the corresponding one of the valves via the data lines DL. The control unit C is further connected to an extraction analyzing unit AE2 connected to the extraction pipe 8. The data lines DL further interconnect all the feed analyzing units AE1, F, T, P, the valves and the control unit C. Additional ones of the analysing units F, T and P can be arranged with the analyzing unit AE2.

Alternatively, each group of the scavenger units may have an additional control unit C' that controls the valves 6' within the group and communicates with the other additional control unit(s) in the other group(s) and -if present- with the control unit C. This means there can be a system having as many control units C' as there are groups of the scavenger units. In this case, the control units are interconnected with the corresponding datalines and further at least one of the additional control units is connected to corresponding analysing units for the feed gas and the processed gas. There can be a system having a control unit C being connected to the analysing units for the feed gas and the processed gas and the system further comprising additional control units C'. One example of a configuration having an additional control unit C' is exemplary depicted in Figure 2 in the group of scavengers indicated with "Y".

Independently from the aforementioned example, each group of the scavenger units may comprise an additional gas analyzing unit AE' that is located between both of the scavenger units 5 such that no matter which one(s) of the scavenger units 5 is in lead in the group of scavenger units through which the gas passes through one of the scavenger units 5, then passes through the gas analyzing unit and then through the other scavenger unit 5 prior to leaving the respective group of scavenger units. This additional gas analyzing unit AE' may be connected to either the control unit C and/or to the corresponding control unit C' of this group. The advantage in having an additional analyzing unit AE' per group of the scavenger units 5 is that the lead/lag configuration of the scavenger units within the respective group can be controlled individually and dependent on the results of the additional analyzing unit AE'. For example, if the analysis of the additional analyzing unit AE' indicates that the scavenger unit 5 being in the lead within the flow in this group of scavenger units 5 is not operating within a predefined range, the other scavenger unit 5 in the group can be switched into the lead by means of valves 6' within this group of scavenger units.

Two additional analyzing units AE' are depicted in the group of scavengers Y in figure 2 due to clarity reasons. As describe above, there might be only one additional analyzing unit AE' provided in the the group of scavengers Y.

The additional gas analyzing unit(s) AE', the additional control unit(s) C, the analysing units AE1 and AE2, thermometer and pressure gauges as well as the control unit C can be all connected via the datalines DL in order to form a network together with the valves 6. This network might be comprised by sub-networks such as the network within a group of scavengers Y which in turn might be comprised by the additional control unit C' at least one additional analyzing unit AE' and the respective valves within the group of scavengers Y. This network can communicate with the rest of the network outside the group of scavengers Y.

The feed analyzing units comprise in this aspect a gas analyzing unit AE1 that is configured to analyze desired properties and/or the composition (e.g. the H₂S content, etc.) of the sour gas being fed into the feed pipe 7. The feed analyzing units further comprise a thermometer T for measuring the temperature of the sour gas in the feed pipe 7. The feed analyzing units further comprise a pressure gauge P for measuring the pressure of the sour gas within the feed pipe 7. The feed analyzing units further comprise a flow meter for measuring the flow rate of the feed gas in the feed pipe 7. The extraction analyzing unit AE2 is also configured to analyze the desired properties and/or the composition (e.g. H₂S content, etc.) of an extraction gas in the extraction pipe 8. There can be another thermometer T, another pressure gauge P and another flow meter arranged with the extraction analyzing unit AE2 (not shown in fig. 2).

The method for the treatment of the sour gas is a continuous process such that all components (e.g. scavenger units, valves, analysing units, etc.) in the system function and interact with each other in "real-time". The control unit C continuously queries all analyzing units (feed and treated gas) in order to control, based on data from the analyzing units, the opening degree of the valves 6 independently from each other of the valves 6 and thus the gas flow within the system and also through the respective scavenger units 5 / group of scavenger units Y. The control unit(s) further continuously query(ies) the opening degrees of the valves.

The following example compares the system and method according to the prior art with the system 10 (depicted in fig. 2) and method according to the present invention.

The feed gas is sour or "natural" gas, having a H₂S content ranging between 35 and 100 ppmv, with average value at 50 ppmv but with a few peaks (1 hours/month) at 250 ppmv. The treated gas (also: "extraction gas" or "gas to be extracted") should contain less than 40 ppmv of H₂S. The prior art design approach will consider the 250 ppmv H₂S peak.

Considering 100 MMSCFD, at 40°C and 55 bars
100 MMSCFD = 111630 Nm³/h = 4983 kmol/h
('MMSCFD' for Million Standard Cubic Feet)

Considering the 250 ppmv peak, 86 % of the total stream of the natural/sour gas should be passed through the scavenger bed (with 3 ppmv H₂S at the outlet) to target the 40 ppmv specification in the treated gas.

Considering a usual velocity of the natural gas passing through a scavenger bed/unit (0.08 m/s):
Flow to be treated: 86 % of (111630 Nm³/h = 2327 Am3/h) = 2001 Am³/h
Bed diameter: 3m
Height of the bed: 6.6 m
Vessel height: 7.8 m
Amount of solid scavenger material/bed (or unit) assuming density at 1200 kg/m³: 56 tons/bed.
The assumed adsorption rate is 0.2 kg H₂S per kg of scavenger.
Adsorption Capacity of the scavenger unit is therefore 11200 kg H₂S

Considering the present example, it is necessary to remove 1.7 kg H₂S per hour from the natural/sour gas.

Considering the possible peak (1h at 250 ppm /month) in the present example, it is necessary to remove 42.5 kg H₂S per hour from the natural/sour gas.

This results in an average monthly amount of 1265 kg H₂S per month (30 days) to be removed from the natural/sour gas
This leads to a yearly amount of H₂S to be removed of 14000 kg H₂S/year, requiring about 70 tons of scavenger per year (see assumed adsorption rate above) in the scavenger units 5.

The scavenger unit of the above example can be in operation based on the above calculations for 8 to 9 months.

It will be recalled that the method according to the prior art uses two scavenger units in series (lead / lag system). That means that the 112 tons of adsorbents will be in operation for 16 to 18 months.

As a comparison, the system and method according to this disclosure will be considered. The system of this disclosure uses three scavenger units 5. The three scavenger units 5 are smaller in size as the two scavenger units of the conventional example above.

The maximum flow to be treated is to be considered still 86 % of the flow of the sour gas.

The bed diameter of the small scavenger unit 5 is 1.8 m

The height will be 4 m.

Amount of solid scavenger material will be 12 tons/bed

Adsorption capacity of the scavenger unit 5 is 2400 kg of H₂S.

One of the scavenger units 5 will treat 86 % of 32000 Nm³/h (29 % of the sour gas)

H2S content will be 37 ppmv after mixing the treated gas with the untreated sour gas.

One small scavenger unit 5 is sufficient to treat the average 50 ppmv H₂S in the feed.

The other small scavenger unit 5 will be on line to accommodate the peak.

The small scavenger unit 5 can be in operation for 60 days
24 tons of adsorbents will be in operation for 4 months maximum.

The stand by scavenger units 5 (in this example: two scavenger units) will be used in case of peak

Comparison Table of the example above:

| | Prior art | Present disclosure |
|---|---|---|
| Number of bed | 1+1 | 3 * (1+1) |
| Bed Diameter | 3 | 1.8 |
| Bed height | 6.6 | 4 |
| Vessel Height TL/TL | 7.8 | 5.2 |
| Mass catalyst /bed | 56 tons | 12 tons |
| Total mass of catalyst | 112 tons | 72 tons |

It will be recalled that a calculated 70 tons of scavenger material per year are required in the prior art (see above). So, the overcapacity in case of the system of the prior art is 42 tons vs. the 2 tons according to the system of the present application.

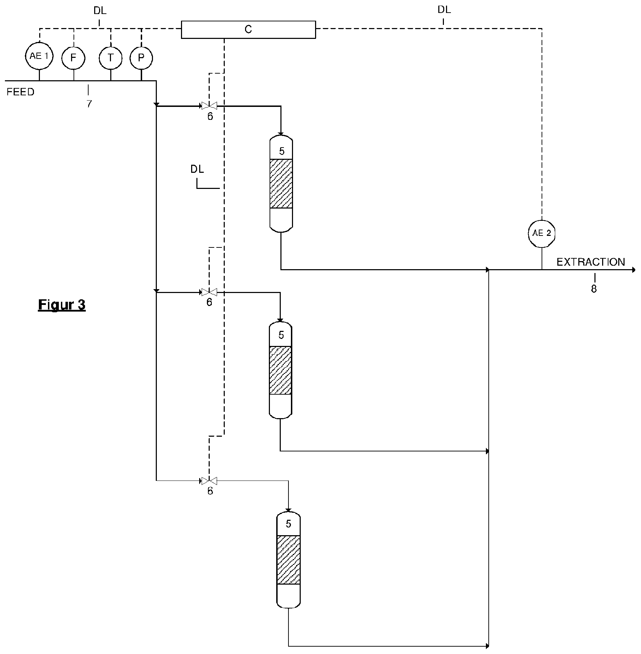

In one alternative aspect of the system, it is possible to replace each group of the scavenger units 5 shown in Fig 2 either individually or entirely (i.e. all three groups) by one single scavenger unit 5. In this alternative aspect, in which all three groups single scavenger units 5 are replaced by a single scavenger unit 5 (depicted in figure 3), there are only three scavenger units 5 and only one valve 6 upstream of each of the scavenger units 5. The three valves 6 in this alternative aspect are connected to the data lines DL. The mode of operation of this alternative aspect corresponds to the mode described above and the method outlined below.

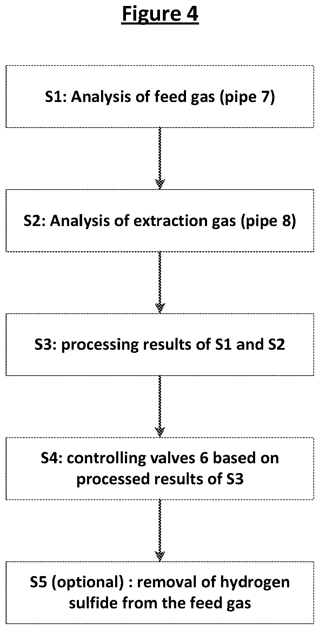

The method according to the present invention is depicted in its main steps in figure 4. In step S1 a feed gas ("FEED" in pipe 7, fig. 2) is analysed.

In step S2 a processed gas / extraction gas ("EXTRACTION" in pipe 8, fig. 2) is analysed.

In step S3 results of the analysis of the feed gas and the processed gas are processed.

In step S4 valves upstream of and connected to at least two scavenger units are controlled (valves 6 in figs. 2 and 3). The controlling of the valves is based on the processed results. With the controlling of each valve 6, the amount of feed gas / natural gas entering each scavenger unit 5 is controlled.

The analysis in step S1 may comprises at least one of an analysis of the composition of the feed gas, an analysis of the pressure of the feed gas, an analysis of the temperature of the feed gas. As depicted in the embodiment of figs. 2 and 3 all the above analysis are carried out on the feed gas (pipe 7).

The analysis in step S2 may comprises at least one of an analysis of the composition of the extracted gas, an analysis of the pressure of the extracted gas, an analysis of the temperature of the extracted gas.

The method of figure 4 may comprise an optional step S5 after step S4. In step S5 hydrogen sulfide is removed from the feed gas.

The above steps are happening in "real time" and essentially simultaneously as the method is applied by the disclosed system in "real time" and applies to the systems depicted in figs. 2 and 3.

## Claims

1. A polishing method for treating sour/natural gas for removing hydrogen sulfide, H₂S, from a sour/natural gas, wherein the method comprises the steps of:
- providing a sour/natural gas as feed gas into at least one of at least two scavenger units of a modular scavenger unit system, each of the at least two scavenger units comprising an absorbent bed and the two scavenger units being arranged in parallel;
- removing H₂S from the sour/natural gas;
- analyzing a H₂S content in the feed gas;
- analyzing a H₂S content in a processed gas extracted from at least one scavenger unit;
- processing results of analyzing the H₂S contents in the feed gas and in the processed gas;
- controlling, using a control unit, of valves upstream of and connected to the at least two scavenger units, wherein the controlling of the valves is based on the H₂S contents in the feed gas and in the processed gas from the processed results, wherein with the controlling of the valves, the amount of sour/natural gas entering each scavenger unit is controlled,
wherein the control unit is adapted to adjust the number of scavenger units in operation according to a fluctuation of the feed gas, said fluctuation comprising a fluctuation of the gas flow and/or the H₂S content.

2. A polishing system for treating sour/natural gas for removing hydrogen sulfide, H₂S, from a sour/natural gas, comprising:
- at least two scavenger units of a modular scavenger unit system, each of the at least two scavenger units comprising an absorbent bed and the two scavenger units being arranged in parallel, adapted to remove H₂S from the sour/natural gas;
- at least one feed pipe upstream of the at least two scavenger units;
- at least one extraction pipe downstream of the at least two scavenger units;
- at least one feed analyzing unit, configured to analyze a H₂S content in the sour/natural gas being fed into the feed pipe, connected to the feed pipe;
- at least one extraction analyzing unit, configured to analyze a H₂S content in an extraction gas in the extraction pipe, connected to the extraction pipe;
- at least one valve upstream of the at least two scavenger units;
- at least one control unit, connected to the feed analyzing unit and to the extraction analyzing unit and further connected to the at least one valve, wherein the at least one control unit is adapted to control passage of the sour/natural gas through one or more of the at least two scavenger units based on the H₂S contents in the sour/natural gas and the extraction gas,
wherein the control unit is adapted to adjust the number of scavenger units in operation according to a fluctuation of the feed gas, said fluctuation comprising a fluctuation of the gas flow and/or the H₂S content.

## Patentansprüche

1. Polierverfahren zum Behandeln von Sauer-/Erdgas zum Entfernen von Schwefelwasserstoff, H₂S, aus einem Sauer-/Erdgas, wobei das Verfahren die folgenden Schritte umfasst:
- Bereitstellen eines Sauer-/Erdgases als Zufuhrgas in mindestens eine von mindestens zwei Abscheidereinheiten eines modularen Abscheidereinheitssystems, wobei jede der mindestens zwei Abscheidereinheiten ein Absorptionsmittelbett umfasst und die zwei Abscheidereinheiten parallel angeordnet sind;
- Entfernen von H₂S aus dem Sauer-/Erdgas;
- Analysieren eines H₂S-Gehalts im Zufuhrgas;
- Analysieren eines H₂S-Gehalts in einem verarbeiteten Gas, das aus mindestens einer Abscheidereinheit extrahiert wird;
- Verarbeiten von Ergebnissen der Analyse der H₂S-Gehalte im Zufuhrgas und im verarbeiteten Gas;
- Steuern, unter Verwendung einer Steuereinheit, von Ventilen stromaufwärts von und verbunden mit den mindestens zwei Abscheidereinheiten, wobei das Steuern der Ventile auf den H₂S-Gehalten im Zufuhrgas und im verarbeiteten Gas aus den verarbeiteten Ergebnissen basiert, wobei mit dem Steuern der Ventile die Menge an Sauer-/Erdgas, die in jede Abscheidereinheit eintritt, gesteuert wird,
wobei die Steuereinheit angepasst ist, um die Anzahl von Abscheidereinheiten im Betrieb gemäß einer Schwankung des Zufuhrgases anzupassen, wobei die Schwankung eine Schwankung des Gasstroms und/oder des H₂S-Gehalts umfasst.

2. Poliersystem zum Behandeln von Sauer-/Erdgas zum Entfernen von Schwefelwasserstoff, H₂S, aus einem Sauer-/Erdgas, umfassend:
- mindestens zwei Abscheidereinheiten eines modularen Abscheidereinheitssystems, wobei jede der mindestens zwei Abscheidereinheiten ein Absorptionsmittelbett umfasst und die zwei Abscheidereinheiten parallel angeordnet sind, angepasst, um H₂S aus dem Sauer-/Erdgas zu entfernen;
- mindestens ein Zufuhrrohr stromaufwärts von den mindestens zwei Abscheidereinheiten;
- mindestens ein Extraktionsrohr stromabwärts von den mindestens zwei Abscheidereinheiten;
- mindestens eine Zufuhranalyseeinheit, die konfiguriert ist, um einen H₂S-Gehalt in dem Sauer-/Erdgas zu analysieren, das in das Zufuhrrohr zugeführt wird, verbunden mit dem Zufuhrrohr;
- mindestens eine Extraktionsanalyseeinheit, die konfiguriert ist, um einen H₂S-Gehalt in einem Extraktionsgas in dem Extraktionsrohr zu analysieren, verbunden mit dem Extraktionsrohr;
- mindestens ein Ventil stromaufwärts von den mindestens zwei Abscheidereinheiten;
- mindestens eine Steuereinheit, die mit der Zufuhranalyseeinheit und mit der Extraktionsanalyseeinheit verbunden ist und ferner mit dem mindestens einen Ventil verbunden ist, wobei die mindestens eine Steuereinheit angepasst ist, um den Durchgang des Sauer-/Erdgases durch eine oder mehrere der mindestens zwei Abscheidereinheiten basierend auf den H₂S-Gehalten in dem Sauer-/Erdgas und dem Extraktionsgas zu steuern,
wobei die Steuereinheit angepasst ist, um die Anzahl von Abscheidereinheiten im Betrieb gemäß einer Schwankung des Zufuhrgases anzupassen, wobei die Schwankung eine Schwankung des Gasstroms und/oder des H₂S-Gehalts umfasst.

## Revendications

1. Un procédé de raffinage pour le traitement d'un gaz sulfuré/naturel pour éliminer le sulfure d'hydrogène, H₂S, du gaz sulfuré/naturel, le procédé comprenant les étapes consistant à :
- produire un gaz sulfuré/naturel en tant que gaz d'alimentation dans au moins l'une d'au moins deux unités d'épuration d'un système à unités modulaires d'épuration, chacune des au moins deux unités d'épuration comprenant un lit absorbant et les deux unités d'épuration étant montées en parallèle ;
- éliminer le H₂S du gaz sulfuré/naturel ;
- analyser une teneur en H₂S du gaz d'alimentation ;
- analyser une teneur en H₂S d'un gaz traité extrait d'au moins une unité d'épuration ;
- traiter les résultats d'analyse de la teneur en H₂S dans le gaz d'alimentation et dans le gaz traité ;
- contrôler, à l'aide d'une unité de contrôle, des soupapes en amont des au moins deux unités d'épuration et reliées à celles-ci, le contrôles des soupapes étant basé sur les teneurs en H₂S du gaz d'alimentation et du gaz traité provenant des résultats du traitement, la quantité de gaz sulfuré/naturel entrant dans chaque unité d'épuration étant contrôlée par le contrôle des soupapes,
dans lequel l'unité de contrôle est apte à ajuster le nombre d'unités d'épuration en fonctionnement en fonction d'une fluctuation du gaz d'alimentation, ladite fluctuation comprenant une fluctuation du débit de gaz et/ou de la teneur en H₂S.

2. Système de raffinage pour le traitement d'un gaz sulfuré/naturel pour éliminer le sulfure d'hydrogène, H₂S, du gaz sulfuré/naturel, comprenant :
- au moins deux unités d'épuration d'un système à unités modulaires d'épuration, chacune des au moins deux unités d'épuration comprenant un lit absorbant et les deux unités d'épuration étant montées en parallèle, aptes à éliminer du gaz sulfuré/naturel le H₂S ;
- au moins une conduite d'alimentation en amont des au moins deux unités d'épuration ;
- au moins une conduite d'extraction en aval des au moins deux unités d'épuration ;
- au moins une unité d'analyse de l'alimentation reliée à la conduite d'alimentation, configurée pour analyser une teneur en H₂S du gaz sulfuré/naturel qui est alimenté par la conduite d'alimentation ;
- au moins une unité d'analyse d'extraction reliée à la conduite d'extraction, configurée pour analyser une teneur en H₂S d'un gaz d'extraction dans la conduite d'extraction ;
- au moins une soupape en amont des au moins deux unités d'épuration ;
- au moins une unité de contrôle, reliée à l'unité d'analyse d'alimentation et à l'unité d'analyse d'extraction et reliée également à l'au moins une soupape, l'au moins une unité de contrôle étant apte à contrôler le passage du gaz sulfuré/naturel par au moins l'une des au moins deux unités d'épuration sur la base des teneurs en H₂S du gaz sulfuré/naturel et du gaz d'extraction ;
dans lequel l'unité de contrôle est apte à ajuster le nombre d'unités d'épuration en fonctionnement en fonction d'une fluctuation du gaz d'alimentation, ladite fluctuation comprenant une fluctuation du débit de gaz et/ou de la teneur en H₂S.
